# EUROPEAN PATENT SPECIFICATION

(11) **EP 1 762 761 B1**
(45) Date of publication and mention of the grant of the patent: **31.10.2018**
(21) Application number: 05741616.6
(22) Date of filing: 19.05.2005
(51) Int. Cl.: F16K 27/02, F16K 27/04, F16K 7/14

(54) **Valve**
Ventil
Clapet

(30) Priority: 08.06.2004 JP 2004170370
(43) Date of publication of application: 14.03.2007
(73) Proprietor: Surpass Industry Co., Ltd., Gyoda-shi, Saitama 3610037 (JP)
(72) Inventor: IGARASHI, Hiroki, C/O Surpass Industry Co., Ltd., Gyoda-shi, Saitama 3610037 (JP)
(74) Representative: Vossius & Partner Patentanwälte Rechtsanwälte mbB
(86) International application number: PCT/JP2005/009160
(87) International publication number: WO 2005/121619

(56) References cited:
- EP-A2- 0 234 835
- EP-A2- 1 130 297
- WO-A1-2005/075865
- JP-A- 9 273 641
- JP-A- H09 273 641
- JP-A- 2002 310 316
- JP-A- 2002 310 316
- US-A- 5 002 086
- US-B1- 6 254 057

## Description

### Technical Field

The present invention relates to a valve body and a valve having this valve body.

### Background Art

A valve, having a body made from a fluorocarbon polymer material and on which a fluid inlet part, an inlet port communicating with this fluid inlet part, an outlet port, and a fluid outlet part communicating with this outlet port are formed thereinside, is known (refer for example to patent document 1). Further valves are known from JP 2002 310316 A and US 6 254 057 B1.

### Patent Document 1:

Japanese Unexamined Patent Application Publication No. 2003-294158 (FIG. 11).

### Disclosure of Invention

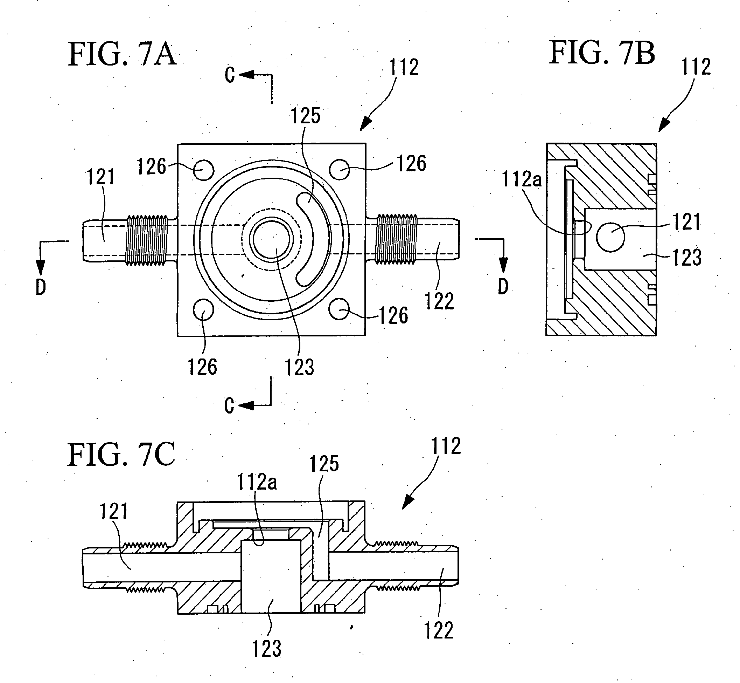

As shown for example in FIG. 7 A to FIG. 7 C, in such a valve body 112, an outlet port 125 that communicates with a fluid outlet part 122 is formed on a part of a seat part 112a that is formed on one end portion of an inlet port 123 (namely, an outlet end of the inlet port 123), that is to say, it is formed on a part of the radial outside (circumferential outside) of the inlet port 123 (about 110 degrees in angle). Therefore, when assembling the valve using fastener members such as screws, the tightening stresses vary due to the tightening state (nonuniform tightening) of each fastening member at each position where the fastener members are located. As a result, potential deformations (deflections) of the body 112 is of concern. Such deformations (deflections) of the body 112 also deforms the seat part 112a which contacts a tip portion of a valve element such as an unillustrated needle or diaphragm, so that the tip portion of the valve element cannot closely contact with the seat part 112a completely and evenly. That is, even if trying to push the tip portion of the valve element against the seat part 112a to make the valve itself a closed state, a gap occurs between the tip portion of the valve element and the seat part 112a, causing a fluid leak from the inlet port 123 towards the outlet port 125.

In FIG. 7 A to FIG. 7 C, reference symbols 121 and 126 respectively represent a fluid inlet part and screw holes.

The present invention takes the above-described existing problems into consideration with an object of providing a valve having a valve body, that prevents deformation of the seat part due to stresses caused by nonuniform tightening, and which can be completely shut when in a closed state.

The present invention employs the following means to solve the above problems.

A valve body of a valve according to the present invention is a valve body made from a resin material and having an internal port, and an external port provided on the outside of the internal port, and a seat part provided on one end portion of the internal port and abutting with a tip portion of a valve element. The external port is preferably provided on the radial outside of the seat part around substantially the whole circumference.

According to such a valve body, the external port is formed so as to surround the seat part, that is, it is formed around the entire circumference on the outside of the seat part, and one end portion of the internal port having the seat part is provided so that it is isolated from the main part of the body (that is, the outer part of the body).

Accordingly, even if the main part of the body is deformed by stresses when fastened by fastener members such as screws, the deformation is not transferred to (does not affect) the one end portion of the internal port, and the shape of the seat part is maintained in a constant shape all the time.

In other words, even if the main part of the body is deformed, the deformation is absorbed by the external port and the deformation of the seat part is prevented.

A valve according to the present invention is defined by the appended claim.

According to such a valve, even if the main part of the body is deformed by stresses when fastened by fastener members such as screws, the influence of the deformation is not transferred to (does not affect) the one end portion of the internal port, and the shape of the seat part is maintained in a constant shape all the time. Therefore, when closing the valve, the tip portion of the valve element completely abuts with the seat part, and leakage from the internal port towards the external port, or leakage from the external port towards the internal port is prevented.

According to the valve of the present invention, there is the effect that deformation of the seat part due to stresses caused by nonuniform tightening can be prevented, and it is possible to shut the valve completely when in a closed state.

### Brief Description of Drawings

FIG. 1 is a longitudinal cross-section view showing one embodiment of a valve according to the present invention.
FIG. 2 A to C are drawings showing a valve body of FIG. 1 and FIG. 6, in which A is a top view, B is a cross-section along section A-A of A, and C is a cross-section along section B-B of A.
FIG. 3 is a schematic block diagram showing one specific example of a liquid delivery line.
FIG. 4 is a graph for where the valve shown in FIG. 1 is applied to the liquid delivery line shown in FIG. 3, showing a relationship between pressures at each pressure gauge and a time after the valve and an air operated valve are (simultaneously) closed from a liquid delivering state.
FIG. 5 is a graph for where a valve having a body shown in FIG. 7 A to FIG. 7 C is applied to the liquid delivery line shown in FIG. 3, showing a relationship between pressures at each pressure gauge and time after the valve and an air operated valve are (simultaneously) closed from the liquid delivering state.
FIG. 6 is a longitudinal cross-section view showing another embodiment of a valve not according to the present invention.
FIG. 7 A to C are drawings showing a conventional valve body, in which A is a top view, B is a cross-section along section C-C of A, and C is a cross-section along section D-D of A.

### Best Mode for Carrying Out the Invention

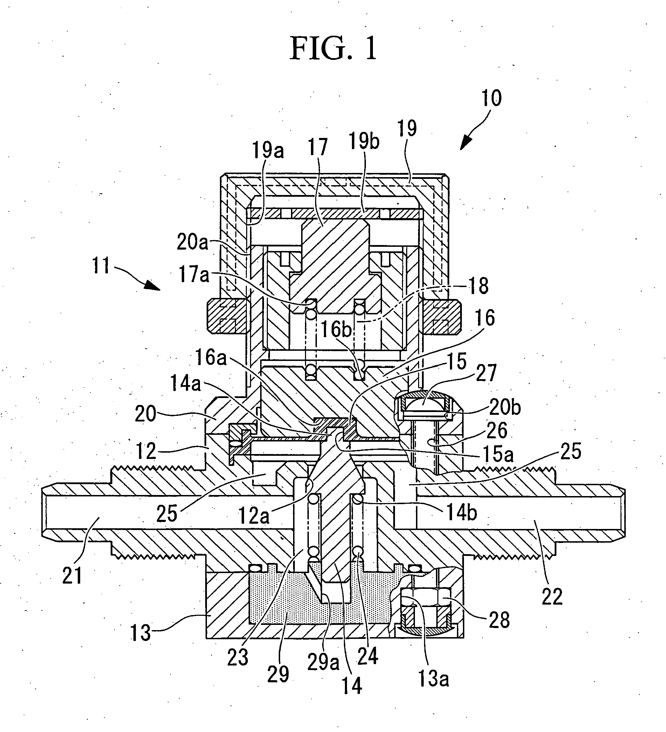

One embodiment of a valve according to the present invention is described with reference to FIG. 1.

A valve 10 according to the present invention (referred to "regulator valve" hereunder) comprises an operating section 11, a body 12, a base 13, and a needle (valve element) 14 as the main elements.

The operating section 11 comprises a diaphragm 15, a diaphragm head 16, a plunger 17, a first spring 18, a knob 19, and a housing 20.

At one end face of the diaphragm 15, the lower face in Fig.1, a concave area 15a is formed to receive (be fitted with) a convex portion 14a that is formed on the end face of the tip portion (upper end portion in FIG. 1) of the needle 14. The center part having the concave area 15a is configured to be received by (fit inside) a first concave area 16a formed at one end portion (lower end portion in FIG. 1) of the diaphragm head 16.

As shown in FIG. 1, the diaphragm head 16 is a member that is formed so that its longitudinal cross-section has a substantially rectangular shape with an open side having the first concave area 16a that accommodates the center part of the diaphragm 15 at one end portion thereof, and a second concave area 16b that receives (accommodates) one end portion (lower end portion in FIG. 1) of the first spring 18 at the other end portion thereof (upper end portion in FIG. 1).

As shown in FIG. 1, the plunger 17 is a member that is formed so that its longitudinal cross-section has a substantially inverted T shape (convex shape), and has a concave area 17a that receives (accommodates) the other end portion (upper end portion in FIG. 1) of the first spring 18 at one end portion (lower end portion in FIG. 1) thereof.

The first spring 18 is a compression coil spring positioned between the diaphragm head 16 and the plunger 17, with its one end portion being fitted inside the second concave area 16b of the diaphragm head 16 and with the other end portion being fitted inside the concave area 17a of the plunger 17.

The knob 19 is a cylinder shaped member operated by a user in order to adjust an outlet pressure (secondary pressure) P2 of the valve 10, having an internal thread portion formed on an internal wall surface 19a thereof that threads with an external thread portion formed on an external wall surface 20a of the housing 20. Due to these thread portions, rotating the knob 19 in one direction (e.g. clockwise seen from the top in FIG. 1) moves the knob 19 towards the body 12 (i.e. downward in FIG. 1), and rotating the knob 19 in the other direction (e.g. counterclockwise seen from the top in FIG. 1) moves the knob 19 in the opposite direction to the body 12 (i.e. upward in FIG. 1).

A knob support 19b is arranged at an internal proximal portion of the knob 19 (upper end portion in FIG. 1), with one face (lower face in FIG. 1) pushing down the other end face (upper end face in FIG. 1) of the plunger 17 by rotating the knob 19 in one direction.

The housing 20 slidably accommodates the diaphragm head 16 and the plunger 17 inside, and also accommodates the first spring 18. Moreover, the housing 20 is configured to be able to sandwich a peripheral portion of the diaphragm 15 between itself and the body 12.

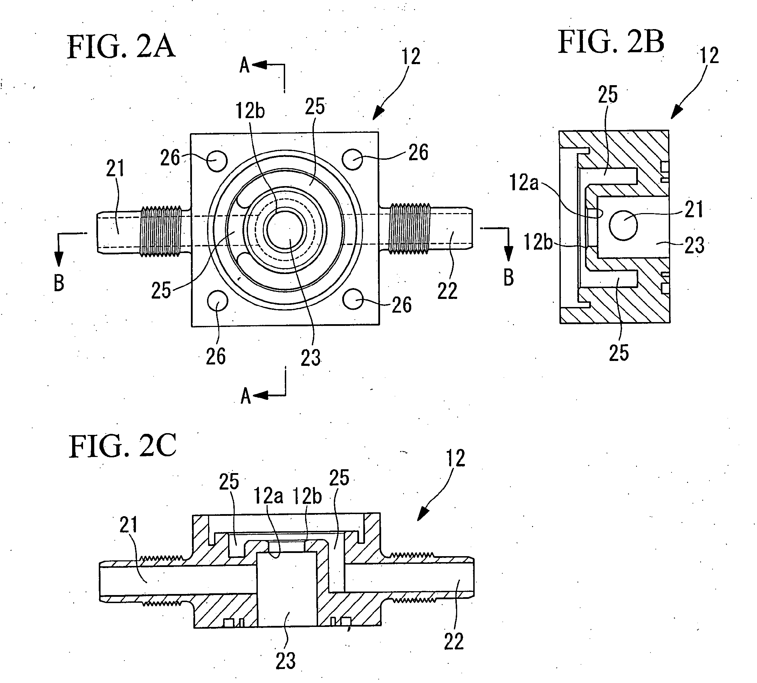

As shown in FIG. 2 A to 2 C, the body 12 is formed into a substantially rectangular parallelepiped and is made from resin, for example from a fluoroethylene resin material such as PTFE (polytetrafluoroethylene), PCTFE (polychlorotrifluoroethylene) or PFA (tetrafluoroethylene-perfluoroalkylvinyl ether copolymer).

Also, a fluid inlet part 21 is provided on one side face of the body 12 (left side face in FIG. 2 A and 2 C), and a fluid outlet part 22 is provided on the other side face (right side face in FIG. 2 A and 2 C) positioned on the opposite side to the fluid inlet part 21.

An inlet port (internal port) 23 extending perpendicular to the extending directions (left and right directions in FIG. 2 A and FIG. 2 C) of the fluid inlet part 21 and the fluid outlet part 22, and also communicating with the fluid inlet part 21, is provided at the center part of the body 12. Also, a first seat part 12a is formed on the outlet end portion (one end portion) of the inlet port 23, and as shown in FIG. 1, the needle (valve element) 14 and the second spring 24 are arranged in the inlet port 23.

An outlet port (external port) 25 is provided on the radial outside (outside in the circumferential direction) of the inlet port 23 so as to surround the entire circumference of the first seat part 12a (360 degrees in angle). The outlet port 25 is a groove that forms a ring like shape in plan view, and communicates with the fluid outlet part 22.

Also, in FIG. 2 A, reference symbol 26 denotes screw holes that are penetrated by a fastener member such as a screw to attach the housing 20, the body 12, and the base 13, and are formed at each of the four corners of the body 12 (i.e. the main part of the body 12) parallel to the extending direction of the inlet port 23.

In this embodiment, as shown in FIG. 1, pan head screws 27 and hexagonal nuts 28 are used as fastener members, and concave areas 20b are provided in the housing 20 to accommodate the heads of the pan head screws 27, and concave areas 13a are formed in the base 13 to accommodate the hexagonal nuts 28.

The base 13 comprises a needle stopper 29 therein. The base 13 is a member that is arranged abutting one face (the face positioned on the bottom in FIG. 1) of the body 12 together with the needle stopper 29, and shuts off the other end portion of the inlet port 23 (the end portion opposite to the outlet end portion).

A concave area 29a that slidably accommodates the other end portion (lower end portion in FIG. 1) of the needle 14 is formed in one end portion (upper end portion in FIG. 1) of the needle stopper 29. The second spring 24 is a compression coil spring similar to the aforementioned first spring 18, and is arranged between the step portion 14b of the needle 14 and the needle stopper 29, biasing the needle 14 towards the first seat part 12a.

According to the regulator valve 10 of the present embodiment, when a user rotates the knob 19 in one direction (i.e. clockwise seen from the top in FIG. 1), the knob support 19b as well as the knob 19 move downward in FIG. 1. As the knob support 19b moves downward, the plunger 17 is pushed downward, and thus the first spring 18 and the diaphragm head 16 also move downward, making the diaphragm 15 deflect downward, and also pushing the needle 14 downward against the biasing force of the second spring 24. When the needle 14 is pushed down, a gap occurs between the tapered portion (tip portion) of the needle 14 and the first seat part 12a, making the valve open state (opened), enabling the fluid to flow from the inlet side (primary side) to the outlet side (secondary side).

The outlet pressure (secondary pressure) P2 is controlled by the spring force of the first spring 18 balancing (equilibrating) the outlet pressure (secondary pressure) P2 via the diaphragm 15.

Therefore, when the inlet pressure (primary pressure) P1 increases and the outlet pressure (secondary pressure) P2 becomes greater than the spring force of the first spring 18, the diaphragm 15 moves upward, and the needle 14 moves upward making the gap between the tapered portion of the needle 14 and the first seat part 12a smaller (making the passage narrower), and thus the outlet pressure (secondary pressure) P2 is decreased.

On the other hand, when the inlet pressure (primary pressure) P1 lowers and the outlet pressure (secondary pressure) P2 becomes less than the spring force of the first spring 18, the diaphragm 15 moves downward, and the needle 14 moves downward making the gap between the tapered portion of the needle 14 and the first seat part 12a bigger (making the passage wider), and thus the outlet pressure (secondary pressure) P2 is increased.

In this manner, the needle 14 moves upward and downward following the fluctuations of the inlet pressure (primary pressure) P1, thus adjusting the aperture of the valve automatically. As a result, the outlet pressure (secondary pressure) P2 is maintained constant.

On the other hand, when a user rotates the knob 19 in the opposite direction (i.e. counterclockwise seen from the top in FIG. 1), the knob support 19b as well as the knob 19 moves upward in FIG. 1. As the knob support 19b moves upward, the plunger 17, the first spring 18, and the diaphragm head 16 also move upward, and the needle 14 and the diaphragm 15 are pushed upward by the biasing force of the second spring 24. When the needle 14 is pushed up, the gap between the tapered portion of the needle 14 and the first seat part 12a becomes narrower, and the valve eventually becomes a closed state (closed), stopping the fluid flow from the inlet side (primary side) to the outlet side (secondary side).

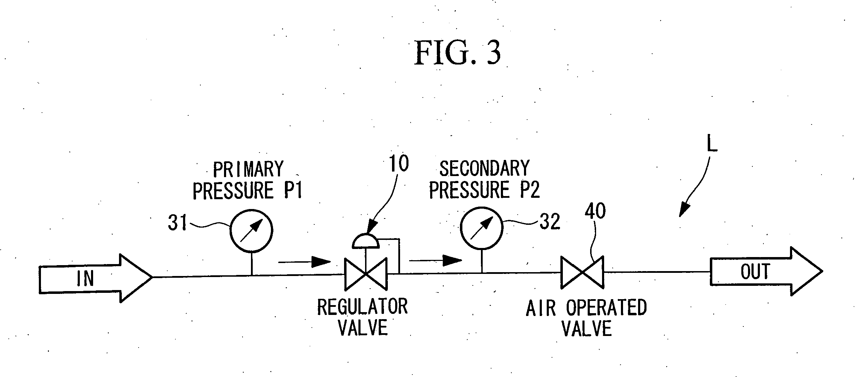

Next, the regulator valve 10 according to the present embodiment, assembled with nonuniform tightening forces is positioned for example in a liquid delivery line L as shown in FIG. 3, and its performance is tested.

In FIG. 3, reference symbols 31, 32, and 40 respectively denote a pressure gauge that detects the inlet pressure (primary pressure) P1 of the regulator valve 10, a pressure gauge that detects the outlet pressure (secondary pressure) P2 of the regulator valve 10, and an air operated valve (so-called on-off valve) that permits and stops the fluid supply to the downstream side of the liquid delivery line L.

In the liquid delivery line L arranged in this manner, firstly the air operated valve 40 located on the downstream side of the regulator valve 10 is set to a closed state (closed). Then, in this condition, the liquid delivery pressure that is supplied to a point of use located on the downstream side of the air operated valve 40, that is, the outlet pressure P2, is adjusted by adjusting (operating) the knob 19 of the regulator valve 10. After that, the liquid delivering to the point of use is started by making the air operated valve 40 open state (opened).

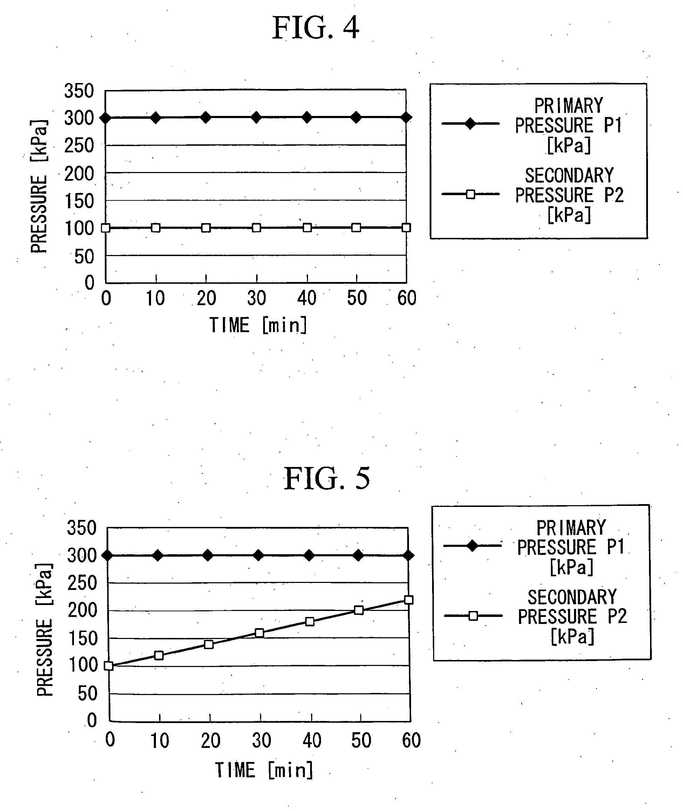

The liquid delivering to the point of use is stopped by closing (simultaneously) both of the regulator valve 10 and the air operated valve 40. Here FIG. 4 is a graph showing a relationship between the pressure [kPa] at the pressure gauge 31, the pressure [kPa] at the pressure gauge 32, and time [min] after the regulator valve 10 and the air operated valve 40 are (simultaneously) closed.

As shown in FIG. 4, it is understood that the pressures at the pressure gauge 31 and the pressure gauge 32 are maintained constant (300 [kPa] and 100 [kPa] in this test).

This is because of the following reason. According to the regulator valve 10 of the present invention, since the outlet port 25 of the body 12 is formed so that it surrounds the first seat part 12a, that is, formed at the outside of the first seat part 12a over the entire circumference, the outlet end portion of the inlet port 23 having the first seat part 12a is isolated from the portion where the screw holes 26 are formed. Thus, the tightening stresses caused by tightening the fastener members 27 and 28 such as screws (refer to FIG. 1) are not transmitted to (do not act on) the outlet end portion of the inlet port 23, and the shape of the first seat part 12a can be maintained in a constant shape at all times regardless of the tightening stresses. Therefore, the tapered portion of the needle 14 can have complete close contact with the first seat part 12a.

On the other hand, FIG. 5 is a graph showing the result of a similar test using a regular valve having a body 112 shown in FIG. 7 A to FIG. 7 C, instead of the body 12 according to the present embodiment, being assembled with nonuniform tightening forces, and being applied to the liquid delivery line L shown in FIG. 3.

As shown in FIG. 5, it is understood that the outlet pressure (secondary pressure) P2 of the regulator valve becomes closer to the inlet pressure (primary pressure) P1 of the regulator valve as the time elapses, and the outlet pressure (secondary pressure) P2 is not maintained at a constant pressure.

This is because of the following reasons. The body 112 is deformed by the stresses caused by nonuniform tightening forces, and accompanying this deformation, the seat part 112a that contacts with the tapered portion of the needle 14 is deformed. Therefore the tapered portion of the valve element 14 can not have complete close contact with the seat part 112a, which makes a gap between the tapered portion of the needle 14 and the seat part 112a, thus causing leakage of the fluid from the inlet port 123 toward the outlet port 125.

In this manner, according to the regulator valve 10 of the present invention, the first seat part 12a can be maintained in a constant shape at all times even if the regulator valve 10 is assembled with nonuniform tightening forces, and the tip portion of the needle 14 can have fully close contact with the first seat part 12a, preventing liquid leakage when in a closed state.

Also, when such a regulator valve 10 is applied to, for example, the liquid delivery line L shown in FIG. 3 and stops the liquid delivery, the outlet pressure of the regulator valve 10 can be maintained constant at all times. Therefore, when the regulator valve 10 and the air operated valve 40 are opened and the liquid delivery is started again, liquid of the same pressure as that before stopping liquid delivery can be supplied to the point of use. That is to say, at all times liquid that has constant pressure can be supplied to the point of use.

The body 12 may also be applied to the air operated valve 40 (so-called on-off valve) shown in FIG. 3.

An air operated valve 40' having the body 12 comprises an actuator assembly 41, a body 12, a base 43 and a diaphragm (valve element) 44 as the main elements.

The actuator assembly 41 comprises a stopper 45, a spring 46, and an actuator body 47.

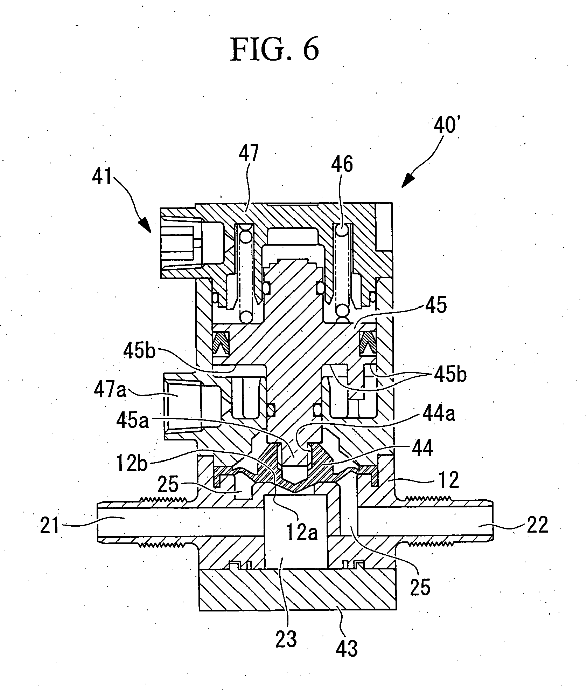

As shown in FIG. 6, the stopper 45 is a member configured to be a substantially cross like shape in its longitudinal cross-section, and has a convex portion 45a that fits a concave area 44a formed in the center part of the diaphragm 44, at one end part (lower tip portion in FIG. 6) thereof.

A spring 46 is arranged between an actuator body 47 and the stopper 45, and biases (pushes) the stopper 45 and the diaphragm 44 toward the body 12 (more particularly, toward a second seat part 12b formed on the body 12).

The actuator body 47 slidably accommodates the stopper 45 therein and also accommodates the spring 46. Moreover the actuator body 47 is configured to be able to sandwich the diaphragm 44 between itself and the body 12.

An air inlet 47a to which control air (operation air) is introduced, is formed on one side face of the actuator body 47, through which the control air is introduced to the inside of the actuator body 47

As shown in FIG. 2 A to FIG. 2 C, the body 12 is formed into a substantial rectangular parallelepiped and is made for example from a fluoroethylene resin material such as PTFE (polytetrafluoroethylene), PCTFE (polychlorotrifluoroethylene) or PFA (tetrafluoroethylene-perfluoroalkylvinyl ether copolymer).

Also, a fluid inlet part 21 is provided on one side face of the body 12 (left side face in FIG. 2 A and FIG. 2 C), and a fluid outlet part 22 is provided on the other side face (right side face in FIG. 2 A and FIG. 2 C) positioned on the opposite side to the fluid inlet part 21.

An inlet port (internal port) 23 extending perpendicular to the extending directions (left and right directions in FIG. 2 A and FIG. 2 C) of the fluid inlet part 21 and the fluid outlet part 22, and also communicating with the fluid inlet part 21, is provided at the center part of the body 12. Also, a second seat part 12b is formed on the outlet end portion (one end portion) of the inlet port 23.

An outlet port (external port) 25 is provided on the radial outside (outside in the circumferential direction) of the inlet port 23 so as to surround the entire circumference of the second seat part 12b (360 degrees in angle). The outlet port 25 is a groove that forms a ring like shape in plan view, and communicates with the fluid outlet part 22.

The base 43 is a member that is arranged abutting against one face (the face positioned on the bottom in FIG. 6) of the body 12 and that closes one end (end on the opposite side to the outlet end) of the inlet port 23. The base 43 may also be used as a fastening plate to fix (install) the assembled air operated valve 40', and is configured to be able to fix the air operated valve 40' by fastener members such as screws onto an unillustrated supporting base or a floor face.

The diaphragm 44 is configured so that the tip end portion thereof (center part of the lower face in FIG. 6) abuts (closely contacts) against the second seat part 12b, and is formed with a concave area 44a that receives (is fitted with) the convex portion 45a of the stopper 45, at the opposite face thereof (upper face in FIG. 6).

According to the air operated valve 40' of the present embodiment not forming part of the present invention, configured as above, the control air being introduced to the inside of the actuator body 47 through the air inlet 47a and having a predetermined pressure acts on the pressure receiving face 45b of the stopper 45, and the stopper 45 and the diaphragm 44 are forced to move away from the body 12 (upper direction in FIG. 1) against the biasing force of the spring 46. That is to say, the control air being introduced to the inside of the actuator body 47 through the air inlet 47a opens the valve (that is, a predetermined gap is made between the tip portion of the diaphragm 44 and the second seat part 12b), and the fluid starts to flow from the inlet side (primary side) to the outlet side (secondary side) through the open state (opened) valve.

On the other hand, after the supply of the control air stops, the biasing force of the spring 46 biases the stopper 45 and the diaphragm 44 towards the body 12, making the tip portion of the diaphragm 44 closely contact with the second seat part 12b, and thus the valve is closed (shut).

That is to say, as shown in FIG. 6, when the control air is not introduced to the inside of the actuator body 47 through the air inlet 47a (that is, when the valve is closed), the tip portion of the diaphragm 44 is pushed against the second seat part 12b by the biasing force of the spring 46, shutting the communication between the inlet port 23 and the outlet port 25, and the inflow of the fluid from the inlet port 23 to the outlet port 25 is shut off.

Also in the air operated valve 40' configured as above, operational effects similar to with the regulator valve 10 described using FIG. 1 can be obtained.

Also, the operating section 11 or the actuator assembly 41 for operating the valve are not limited to the manual type or air operated type as described above, but may be changed to electrically operated types.

Moreover, the body 12 can be applied to not only the regulator valve (decompression valve) or the air operated valve (on-off valve) as described above, but also to flow regulating valves or other valves having similar configurations.

Furthermore, in the aforementioned embodiment, the example in which the fluid flows in sequence from the fluid inlet part 21, to the inlet port 23, the outlet port 25, and the fluid outlet part 22 is exemplified. However, the present invention is not limited to such an example, and may be applied to ones in which the flow direction is opposite. That is, for example, in the aforementioned embodiment, the fluid may flow in sequence from the fluid outlet part 22, to the outlet port 25, the inlet port 23, and the fluid inlet part 21.

## Claims

1. A valve (10) having a valve body (12), a base (13), a needle valve element (14), and an operating section (11), wherein the valve body (12), which is made from a resin material and has a main part, comprises an internal port (23), an external port (25) provided on the outside of said internal port (23), a fluid inlet part (21) communicating with the internal port (23) and a fluid outlet part (22) communicating with the external port (25), and
wherein a seat part (12a) is provided on an upper one end portion of said internal port (23) and abutting with a tip portion of the valve element (14),
four screw holes that are penetrated by fastener members are formed at each of four corners of the valve body (12), where said valve body (12) having a rectangular parallelepiped shape,
said external port (25) is provided on the radial outside of said internal port (23) so as to surround the entire circumference of said seat part (12a), and is a groove that forms a ring like shape in plan view,
the one end portion of said internal port (23) is formed so as to be isolated from an outer part of said main part, the one end portion having the seat part (12a),
the valve element (14) and a spring (24) are arranged in said internal port (23),
the base (13) comprises a needle stopper (29) therein, and is a member that is arranged abutting a lower face of said valve body (12) together with the needle stopper (29), and shuts off the other end portion of said internal port (23),
the spring (24) is arranged between a step portion (14b) of the valve element (14) and the needle stopper (29), biasing the valve element (14) towards the seat part (12a), the operating section (11) comprises a diaphragm (15) and a housing (20),
a concave area (15a) at a lower face of the diaphragm (15) receives a convex portion (14a) that is formed on an upper end of the tip portion of the valve element (14),
the fastener members penetrate the four screw holes and attach the housing (20), the valve body (12), and the base (13), and
when the valve element (14) is pushed down, a gap occurs between the tip portion of the valve element (14) and the seat part (12a), enabling a fluid to flow from an inlet side to an outlet side.

## Patentansprüche

1. Ventil (10) mit einem Ventilkörper (12), einer Basis (13), einem Nadelventilelement (14) und einem Bedienungsabschnitt (11),
wobei der Ventilkörper (12), der aus einem Harzmaterial hergestellt ist und einen Hauptteil aufweist, eine interne Durchgangsöffnung (23), eine externe Durchgangsöffnung (25), die an der Außenseite der internen Durchgangsöffnung (23) vorgesehen ist, einen Fluideinlassteil (21), der mit der internen Durchgangsöffnung (23) in Verbindung steht, und einen Fluidauslassteil (22) aufweist, der mit der externen Durchgangsöffnung (25) in Verbindung steht, und
wobei ein Sitzteil (12a) an einem oberen Endabschnitt der internen Durchgangsöffnung (23) vorgesehen ist und auf einen Spitzenabschnitt des Ventilelements (14) aufliegt, vier Schraublöcher, die Befestigungselemente durchdringen, an jeder von vier Ecken des Ventilkörpers (12) ausgebildet sind, wobei der Ventilkörper (12) eine rechteckige Parallelepipedform aufweist,
die externe Durchgangsöffnung (25) auf der radialen Außenseite der internen Durchgangsöffnung (23) vorgesehen ist, so dass sie den gesamten Umfang des Sitzteils (12a) umgibt, und eine Nut ist, die in einer Draufsicht eine Ringform bildet,
der eine Endabschnitt der internen Durchgangsöffnung (23) so ausgebildet ist, dass er von einem äußeren Teil des Hauptteils getrennt ist, wobei der eine Endabschnitt den Sitzteil (12a) aufweist,
das Ventilelement (14) und eine Feder (24) in der internen Durchgangsöffnung (23) angeordnet sind,
die Basis (13) einen Nadelanschlag (29) darin aufweist und ein Element ist, das auf eine Unterseite des Ventilkörpers (12) aufliegend zusammen mit dem Nadelanschlag (29) angeordnet ist, und den anderen Endabschnitt der internen Durchgangsöffnung (23) absperrt,
die Feder (24) zwischen einem Stufenabschnitt (14b) des Ventilelements (14) und dem Nadelanschlag (29) angeordnet ist, wobei sie das Ventilelement (14) zum Sitzteil (12a) vorspannt,
der Bedienungsabschnitt (11) eine Membran (15) und ein Gehäuse (20) aufweist,
ein konkaver Bereich (15a) auf einer Unterseite der Membran (15) einen konvexen Abschnitt (14a) aufnimmt, der an einem oberen Ende des Spitzenabschnitts des Ventilelements (14) ausgebildet ist,
die Befestigungselemente die vier Schraublöcher durchdringen und das Gehäuse (20), den Ventilkörper (12) und die Basis (13) anbringen, und
wenn das Ventilelement (14) nach unten gedrückt wird, eine Lücke zwischen dem Spitzenabschnitt des Ventilelements (14) und dem Sitzteil (12a) auftritt, die es einem Fluid ermöglicht, von einer Einlassseite zu einer Auslassseite zu fließen.

## Revendications

1. Clapet (10), présentant un corps de clapet (12), un socle (13), un élément de clapet à pointeau (14) et une section d'actionnement (11), où le corps de clapet (12), qui est en résine et comporte une pièce principale, comprend un orifice intérieur (23),
un orifice extérieur (25) prévu à l'extérieur de l'orifice intérieur (23), une section d'admission de fluide (21) communiquant avec l'orifice intérieur (23) et une section de refoulement de fluide (22) communiquant avec l'orifice extérieur (25), et
où une partie de siège (12a) est prévue sur une première partie d'extrémité supérieure de l'orifice intérieur (23) et en contact avec une partie de sommet de l'élément de clapet (14),
quatre trous pour vis recevant des éléments de fixation sont ménagés sur chacun des quatre coins du corps de clapet (12), ledit corps de clapet (12) ayant une forme de parallélépipède rectangle,
l'orifice extérieur (25) est prévu radialement en dehors de l'orifice intérieur (23) de manière à entourer toute la circonférence de la partie de siège (12a), étant une rainure ayant une forme annulaire en vue en plan,
la première partie d'extrémité de l'orifice intérieur (23) est formée de manière à être isolée d'une partie extérieure de la pièce principale, la première partie d'extrémité comportant la partie de siège (12a),
l'élément de clapet (14) et un ressort (24) sont disposés dans l'orifice intérieur (23),
le socle (13) contient une butée (29) de pointeau, et est un élément disposé au contact d'une face inférieure du corps de clapet (12) avec la butée (29) de pointeau, et obture l'autre partie d'extrémité de l'orifice intérieur (23),
le ressort (24) est disposé entre une partie en épaulement (14b) de l'élément de clapet (14) et la butée (29) de pointeau, contraignant l'élément de clapet (14) vers la partie de siège (12a),
la section d'actionnement (11) comprend un diaphragme (15) et un boîtier (20),
une surface concave (15a) sur une face inférieure du diaphragme (15) reçoit une partie convexe (14a) formée sur une extrémité supérieure de la partie de sommet de l'élément de clapet (14),
les éléments de fixation sont logés dans les quatre trous pour vis et fixent le boîtier (20), le corps de clapet (12) et le socle (13), et,
quand l'élément de clapet (14) est abaissé, un interstice est ménagé entre la partie de sommet de l'élément de clapet (14) et la partie de siège (12a), permettant à un fluide de s'écouler d'un côté d'entrée vers un côté de sortie.
